# EUROPEAN PATENT APPLICATION

(11) **EP 3 623 879 A1**
(43) Date of publication of application: **18.03.2020**
(21) Application number: 18194525.4
(22) Date of filing: 14.09.2018
(51) Int. Cl.: G05B 13/04, G05B 17/02

(54) **SYSTEM, APPARATUS AND METHOD FOR OPTIMIZING OPERATION OF AN INDUSTRIAL PLANT**

(71) Applicant: Siemens Aktiengesellschaft, 80333 München (DE)
(72) Inventor: KALURI, Ramsatish, 560100 Bangalore (IN); KUMAR, Kiran, 515004 Anantapuramu, Andhra Pradesh (IN); MATHEW, Bony, 683542 Perumbavoor, Kerala (IN); NAIR, Sudev, 560078 Bangalore (IN)
(74) Representative: Isarpatent

(57) **Abstract**

The present invention provides a system, apparatus and method to optimize operation of an industrial plant (180). The industrial plant (180) comprises a plurality of assets (182-188) and is capable of performing at least one process. The method comprising predicting a process reliability of the at least one process based on a process replica of the at least one process and a plant replica (280) of the industrial plant (180). The method includes generating set of optimal parameters of the at least one process based on the predicted process reliability and production criteria associated with a resultant product of the at least one process. The method includes selecting optimized operation parameters from the set of optimal parameters by simulating the set of optimal parameters on the plant replica (280). The method further includes optimizing operation of the industrial plant (180) to satisfy the production criteria by tuning operation parameters of the industrial plant (180) to reflect the optimized operation parameters.

## Description

The present invention relates to optimizing operation of an industrial plant

Industrial plants may include multiple operations and multiple processes to produce a resultant product. The industrial plants may be expected to produce the resultant product to meet a production criteria, such as quality criteria, quantity criteria and time criteria. The production criteria may not be met due to un-availability of assets in the industrial plant and/or due to challenges meeting the quality criteria.

To compensate for inability to meet the criteria, excess quantity of the product may be planned and manufactured. This additional production may attract additional costs. One of the known techniques is to employ a static OEE (Overall Equipment Effectiveness) methodology to satisfy the production criteria. The static methodology may not be suitable in a continuous production plant. Further, the static methodology may not be able to effectively reflect updates in real-time.

In light of the above, there exists a need for optimizing the industrial plant.

Therefore, it is an object of the present invention to provide a system, apparatus and method for optimizing operation of an industrial plant such that the production criteria is met.

The object of the present invention is achieved by a method of optimizing operation of an industrial plant comprising a plurality of assets capable of performing one or more processes to produce a resultant product. Example industrial plant may be a complex industrial set-up with a plurality of assets such as a manufacturing facility, process plants, automation facility and so on. For example, if the industrial plant is an automation facility, then the assets include robots, motors, bearing or any other equipment in the automation facility. In another example, the industrial plant is a facility for pasteurizing and sterilizing foods and pharmaceuticals. In yet another example, the industrial plant is a food and beverage manufacturing facility with multiple processes running in parallel. The processes may include preparation and packaging of the food and the beverage.

The operation of the industrial plant is optimized to ensure that a production criteria for the industrial plant is met. The production criteria may include a quality criteria, a quantity criteria and a time criteria. For example, at time t1 the production criteria may include production of 100 liters of the resultant product with 0.001% contamination. The industrial plant is monitored using sensor data to determine deviation from the production criteria and correcting measures are taken considering availability of the industrial plant.

The sensor data is received from different sources (e.g., sensors, user devices, etc.). The sensors measure operation parameters associated with the asset. For example, the sensors may include thermal imaging devices, vibration sensors, current and voltage sensors, etc. The term "operation parameter" refers to one or more characteristics of the industrial plant, process, assets and/or the resultant product. The operation parameters are used to define an operation state of the industrial plant. Accordingly, the sensor data is a measure of the operation parameters that reflects the condition of the industrial plant, process, assets and/or the resultant product and therefore, is also referred to as "condition data". For example, the sensor data includes data points representing vibration, temperature, current, magnetic flux, velocity, power associated with the asset such as a motor.

The method includes predicting a process reliability of a process based on a process replica of the process and a plant replica of the industrial plant. As used herein the process replica is a digital twin of the process and includes simulation of process parameters associated with resultant product. As used herein "resultant product" refers to the produce of the industrial plant after the process is performed. For example, the resultant product is the food or beverage prepared and packaged. The process replica includes a material model and a criteria model. The material model comprises material parameters associated with materials used in the processes and the resultant. Further, the criteria model includes model of performance factors to be satisfied by the resultant product. The present method dynamically considers the changes in the process parameters and its impact on the resultant product. Therefore, the present method is advantageous for industrial plants that is dynamically adapted to keep the cost optimum while manufacturing only actual demand and not surplus.

The plant replica refers to a digital twin of the industrial plant and the assets. The plant replica reflects an operation state of the industrial plant in real-time. The plant replica includes multiple graphical models of the operation parameters, process parameters, asset load profile, etc. The plant replica also includes one-dimension model or three-dimension model of the industrial plant and each of the plurality of assets. The one-dimension model or three-dimension model may be generated in real time on the premises of the industrial plant. The one-dimension model and three-dimension models are dynamic models that are computed based on laws of physics. The plant replica further includes an availability model for the industrial plant and an asset availability model for each of the assets. The asset availability model includes asset service parameters including historical condition data of the assets. Therefore, the present method is advantageous for industrial plants with multiple assets and the management of the remaining life and availability of the assets play a significant role in achieving the production criteria.

As used herein the process reliability refers to a measure of whether the processes will be performed to the satisfaction of the production criteria without deviation. The process reliability may be determined as a function of critical process variables associated with the processes and the production criteria. The critical process variables are determined from the sensor data associated with operation of the industrial plant and the assets. In an embodiment, probability distribution of the critical process variables is used to determine the process reliability. In another embodiment the process reliability is determined based on discrete event simulation. The method is advantageous as the process reliability is predicted based on a combination of the sensor data, the plant replica and the process replica.

The method includes generating set of optimal parameters of the process based on the predicted process reliability and the production criteria associated with the resultant product of the process. The set of optimal parameters may be determined by measuring a shortfall factor associated with the resultant product based on the availability of the industrial plant and the predicted process reliability. The method further includes selecting optimized operation parameters from the set of optimal parameters by simulating the set of optimal parameters on the plant replica. The operation of the industrial plant is then optimized to satisfy the production criteria by tuning operation parameters of the industrial plant to reflect the optimized operation parameters.

The method may include generating the plant replica of the industrial plant reflecting an operation state of the industrial plant in real-time. The plant replica includes asset replica that is a digital twin of the assets in the industrial plant. Further, the method may include updating the plant replica of the industrial plant with the sensor data associated with the operation state of the industrial plant.

The method may include generating an asset model for each of the plurality of assets based on corresponding asset replica associated with each of the assets. The asset model may include a validated sensor profile of the sensor data associated with the assets. The sensor profile may be validated based on the asset replica. The method also includes managing each of the assets using the asset model throughout the life-cycle of the assets.

The method may include generating the material model, the criteria model and determining process parameters for the process replica. The material model includes material parameters associated with materials used in the process. The criteria model including the quality criteria, the quantity criteria and the time criteria associated with the production criteria. The method may further include generating the criteria model for the industrial plant by determining a performance factor of the production criteria at predetermined time intervals. The performance factor may comprise a measure of performance of the production criteria at the predetermined time intervals. The method may also include predicting optimal performance factors for the process to achieve the production criteria. Accordingly, the process reliability is predicted by comparing the performance factor and the optimal performance factors.

The method may include determining a shortfall factor associated with the resultant product based on the availability model and the predicted process reliability. The method may further include determining impact of the shortfall factor on the production criteria. The set of optimal parameters of the process is generated based on the impact of the shortfall factor.

The method may include determining impact each of the set of optimal parameters on the resultant product by simulating the set of optimal parameters on the plant replica and selecting the optimized operation parameters for the process associated with optimal impact.

The method may also include determining the operation state of each of the plurality of assets in the industrial plant based on the sensor data. The method may also include predicting a new operation state of each of the plurality of assets by simulating the optimized operation parameters on the process replica and the plant replica. The method may further include predicting a remaining life of each of the assets for the operation state and predicting a forecasted life of the assets for the new operation state.

The method may include generating an asset availability model for each of the assets based on the remaining life and the forecasted life of the assets. The asset availability model comprises asset service parameters including historical sensor data of the assets. The method may further include generating the availability model for the industrial plant based on the asset availability model. The availability model comprises scheduled down-time and predicted down-time for the industrial plant.

The method may include rendering the operation state and new operation state of the plurality of assets. For example, representative views of the asset and/or a portion of the industrial plant is rendered on a display device (such as desktop monitor, mobile screen, etc.). The representative view may display the plant replica, the process replica, the availability model, the process reliability, the operation state, the predicted operation state, the remaining life and the forecasted life. In an embodiment, the representative view of the portion of the asset, technical system or the facility is rendered on one or more wearable devices, such as an eye-wearable. According to an embodiment of the invention, the representative view may be, for example a holographic view. A hologram is a photographic recording of a light field that is used to display a multi-dimensional image of the subject (i.e. asset, industrial plant). The holographic view of the portion of the asset is coupled with information from the process replica and the production criteria pertaining to the satisfaction of the production criteria.

The object of the present invention is also achieved by an apparatus to optimize operation of an industrial plant comprising a plurality of assets. The industrial plant performs one or more processes to obtain a resultant product. The apparatus includes one or more processing units and a memory unit communicative coupled to the one or more processing units. The memory unit comprises an optimization module stored in the form of machine-readable instructions executable by the one or more processing units. The optimization module is configured to perform method steps described above. The execution of the asset module can also be performed using co-processing units such as Graphical Processing Unit (GPU), Field Programmable Gate Array (FPGA) or Neural Processing/Compute Engines.

According to an embodiment of the present invention, the apparatus may be an IoT device. As used herein, "IoT device" refers to device connected to the sensors unit in an industrial plant on one end and to a remote server(s) such as for computing server(s) or cloud computing server(s) on the other end). A network of the IoT devices can also be used to implement the apparatus. The apparatus is advantageous as the optimization of the industrial plant is performed on premises without the need of uploading the operation parameters of the industrial plant onto a cloud computing server. Therefore, the apparatus maintains security of the industrial plant and conserves bandwidth.

Additionally, the object of the present invention is achieved by a system comprising one or more devices capable of providing condition data associated with operation of assets in a plurality of industrial plants. The system includes one or more apparatus communicatively coupled to one or more devices, wherein the apparatus is configured optimize operation in one or more of the plurality industrial plants. Further, the system is advantageously configured to learning optimized operation parameters from a first industrial plant and tuning a second industrial plant.

The object of the present invention is achieved by a computer-program product having machine-readable instructions stored therein, which when executed by a processing unit, cause the processing unit to perform a method as describe above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of an apparatus to optimise operation of an industrial plant, according to an embodiment of the present invention;
- FIG 2: is a schematic representation illustrating operation of the apparatus in FIG 1, according to an embodiment of the present invention;
- FIG 3: illustrates a block diagram of a system to optimise operations of multiple industrial plants, according to an embodiment of the present invention;
- FIG 4: is a schematic representation illustrating optimization of a fluid bottling process in a bottling plant, according to an embodiment of the present invention;
- FIG 5: is a schematic representation illustrating one-dimension simulation an asset in the bottling plant of FIG 4, according to an embodiment of the present invention; and
- FIG 6: is a flowchart of a method of optimizing operation of an industrial plant.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

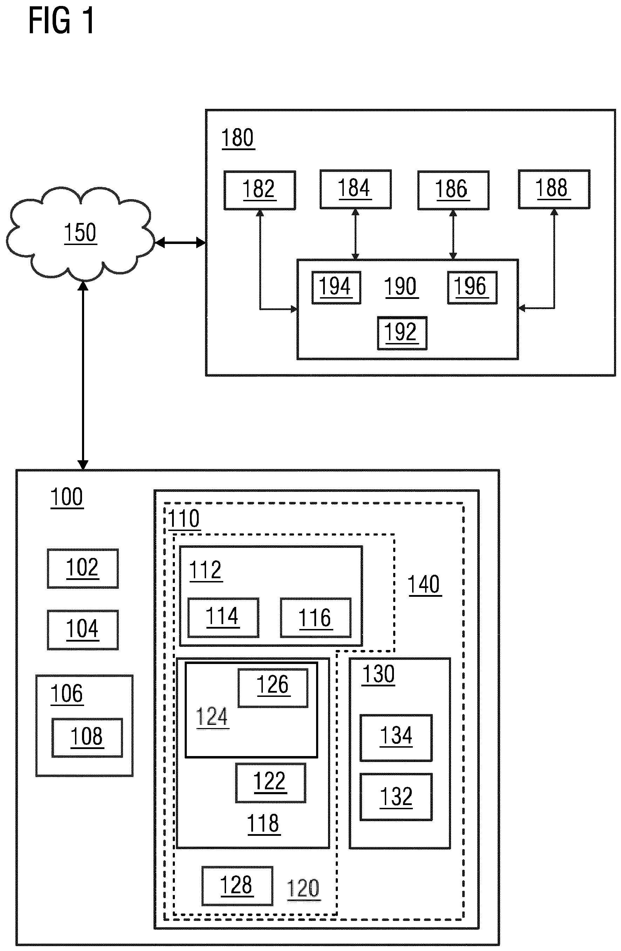

FIG 1 illustrates a block diagram of an apparatus 100 to optimise operation of an industrial plant 180, according to an embodiment of the present invention. The industrial plant 180 includes a plurality of assets 182-188 to execute one or more processes. The operation of the industrial plant 180 is captured by means of sensors (not shown in FIG 1). The industrial plant 180 also includes a controller 190 communicatively coupled to the plurality of assets 182-188. The controller 190 includes a transceiver 192, a processing unit 194 and a memory 196. In an embodiment, functionality of the apparatus 100 is performed by the controller 190. According to the embodiment, the memory 196 includes modules 120 and 130 provided in memory 110 of the apparatus 100. The controller 190 receives sensor data from the sensors and transmits the sensor data to the apparatus 100 via the network interface 150.

The apparatus 100 includes a communication unit 102, at least one processing unit 104, a display 106, a Graphical User Interface (GUI) 108 and a memory 110. The communication unit 102 includes a transmitter, a receiver and Gigabit Ethernet port. The memory 110 may include 2 Giga byte Random Access Memory (RAM) Package on Package (PoP) stacked and Flash Storage. The memory 110 is provided with modules stored in the form of computer readable instructions, for example, 120 and 130. The modules 120, 130 are part of an optimization module 140. The processing unit 104 is configured to execute the defined computer program instructions in the module 140. Further, the processing unit 104 is configured to execute the instructions in the memory 110 simultaneously. The display 106 includes a High-Definition Multimedia Interface (HDMI) display 106 and a cooling fan (not shown in the figure).

The memory 110 includes a simulation module 120 and a life module 130. The simulation module 120 includes a plant simulation module 112, a process simulation module 118 and a parameter module 128. The plant module 112 includes an availability module 114 and a model generator module 116. The process module 118 includes a material module 122 and a criteria module 124. The life module 130 includes an asset life module 132 and a plant life module 134. The following description explains operation of the modules when executed by the processing unit 104.

The plant simulation module 112 is configured to generate a plant replica of the industrial plant 180. The plant replica reflects an operation state of the industrial plant 180 in real-time. The plant replica includes multiple models of the operation parameters, process parameters, asset load profile, etc. For example, the plant replica may include ontology models having ontological data of the asset, prediction models with condition based probability.

The plant replica includes an availability model for the industrial plant 180 generated by the availability module 114. The availability module 114 is further configured to generate an asset availability model for each of the assets 182-188 based on a remaining life and a forecasted life of the assets 182-188. The asset availabilty model 114 includes asset service parameters including historical condition data of the assets 182-188.

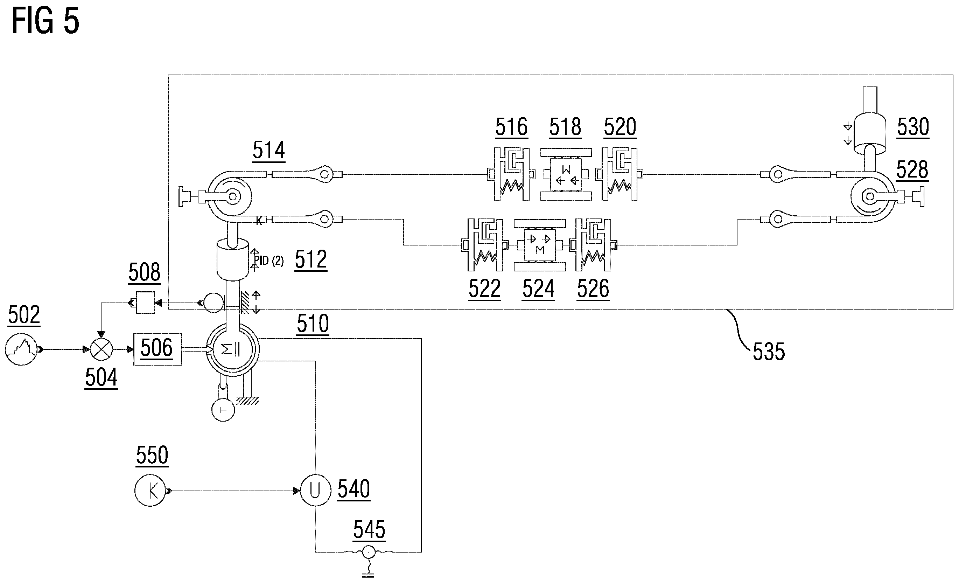

The plant replica also includes one-dimension model or three-dimension model of the industrial plant 180 and each of the plurality of assets 182-188. The model generator module 116 is configured to generate the one-dimension model or three-dimension model in real time. The one-dimension model and three-dimension models are dynamic models that are computed based on laws of physics. Example one-dimension model of a bottling plant is illustrated in FIG 5. The model generator module 116 is configured to update one-dimension model or three-dimension model with the sensor data. Therefore, the plant replica is continually updated to reflect the operation state of the industrial plant 180. Further, the models are used to generate an asset model for each of the plurality of assets 182-188. Accordingly, the plant simulation module 112 is configured to generate asset replicas associated with each of the assets 182-188. The plant replica comprises the asset replica. The asset model enables tracking each of the assets 182-188 through their life-cycle.

The process simulation module 118 is configured to generate a process replica for each of the processes executed by the industrial plant 180. The process replica includes process parameters associated with production criteria of resultant products of the processes. As used herein, the production criteria include quality criteria, quantity criteria and time criteria associated with performance of the at least one process to obtain the resultant product. The process replica includes a material model and a criteria model. The material model is generated by the material module 122. The material model comprises material parameters associated with materials used in the processes and the resultant. Further, the material model includes prediction models to predict interaction between the materials and predict impact of variation in the material on the resultant product.

The criteria model is generated by the criteria module 124. The criteria model includes quality criteria, quantity criteria and time criteria associated with the processes and the production criteria. The criteria module 124 is configured to determine performance factor of the production criteria at predetermined time intervals based on the sensor data. As used herein, the performance factor refers to a measure of performance of the production criteria at the predetermined time intervals. For example, at time t1 the production criteria may include production of 100 liters of the resultant product with 0.01% contamination. The performance factor is a measure of the production criteria at time t1. If at time t1, 80 liters of the resultant product is produced with 0.01% contamination, then the performance factor is 80%. The method to determine the performance factor includes multiple statistical models such as Bayesian calibration, etc.

The criteria module 124 is further configured to predict optimal performance factors for the processes by simulating the optimized operation parameters on the plant replica. In an embodiment, simulation of the optimized operation parameters is performed by combination of ontological model and probability modes. The ontology model includes ontological data of the processes, the resultant product and the industrial plant 180. The ontology model includes nodes that define a set of relationships between the production criteria and the resultant product.

The criteria module 124 includes a reliability module 126. The reliability module 126 is configured to predict the process reliability by comparing the performance factor and the optimal performance factors. As used herein, process reliability refers to a measure of whether the processes is likely to be performed to the satisfaction of the production criteria without deviation. The process reliability is measured for a specified availability of the industrial plant 180. The process reliability is determined as a function of critical process variables associated with the processes and the production criteria. The critical process variables are determined from the sensor data. In an embodiment, probability distribution of the critical process variables is used to determine the process reliability. In another embodiment, the reliability module 126 is configured to perform discrete event simulation to determine the reliability of the processes.

The parameter module 128 is configured to generate a set of optimal parameters of the processes based on the predicted process reliability and the production criteria. To generate the set of optimal parameters, the parameter module 128 determines a shortfall factor based on the resultant product, the availability model and the process reliability. The resultant product is analyzed to understand whether the quality criteria is met. Further, the shortfall factor with respect to the quality criteria and the time criteria is analyzed based on the availablity of the industrial plant 180 and the process reliability. Based on the above analysis, the shortfall factor is determined.

The parameter module 128 is configured to determine impact of the shortfall factor on the production criteria. The impact of the shortfall factor is used to generate the set of optimal parameters of the processes. Further, the parameter module 128 is configured to determining impact each of the set of optimal parameters on the resultant product by simulating the set of optimal parameters on the plant replica. Furthermore, the parameter module 128 is configured to select the optimized operation parameters from the set of optimal parameters. The optimized operation parameters are selected based on optimal impact on the plant replica.

In operation, the parameter module 128 is also configured to determine an operation state of each of the plurality of assets 182-188 in the industrial plant 180 based on the sensor data associated with operation of one of the plurality of assets 182-188, the processes and the industrial plant 180. Then, simulation module 120 predicts a new operation state of each of the plurality of assets 182-188 by simulating the optimized operation parameters on the process replica and the plant replica.

The life module 130 includes the asset life module 132 to predict a remaining life of each of the plurality of assets 182-188 for the operation state. Further, the asset life module 132 is configured to predict a forecasted life of each of the plurality of assets 182-188 for the new operation state. Further, the plant life module 134 is configured to determine a scheduled down-time of the industrial plant 180 and predict unscheduled down-time of the industrial plant 180 based on the availability model and the process reliability.

The GUI 108 is configured to receive audio, haptic and/or visual as input. In response to the input, the GUI 108 is configured to interactively render the availability model, the process reliability, the operation state and the new operation state with the associated remaining life and the forecasted life.

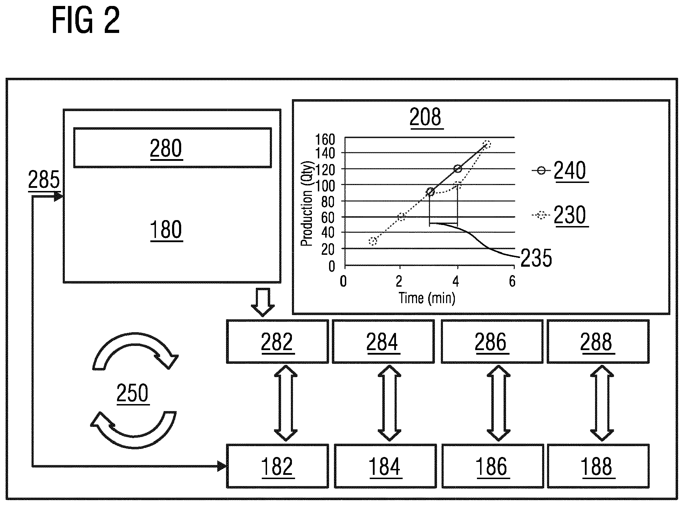

FIG 2 is a schematic representation illustrating operation of the apparatus 100, according to an embodiment of the present invention. The apparatus 100 is provided in the industrial plant 180. The GUI 108 renders a graph 208 indicating the operation state 230 and the new operation state 240. The interaction between the plurality of assests 182-188 and the asset replicas 282-288 is illustrated through the continuous updation of the sensor data 285. Further, the plant replica 280 is updated continually and is indicated by the arrow 250.

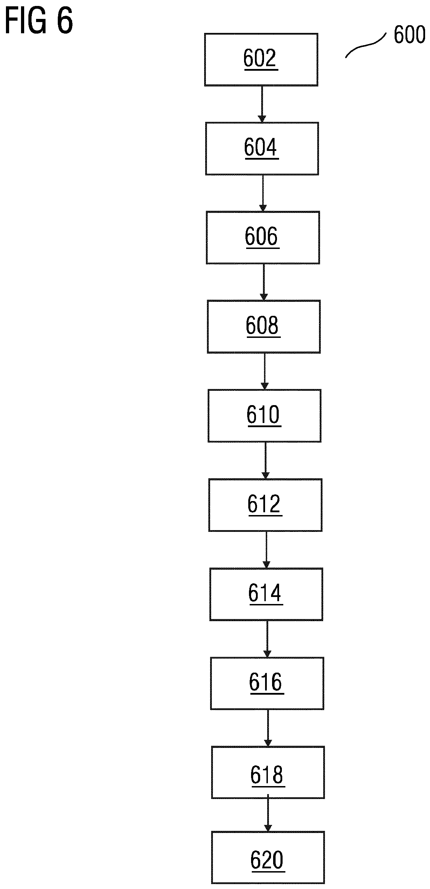

The graph 208 includes time 210 in the x-axis and the production criteria 220 in the y-axis. The operation state 230 is generated based on the sensor data 285 and the resultant product. The new operation state 240 is generated based on simulation of the optimized operation parameter on the plant replica 280, the asset replicas 282-288 and the process replica. The shortfall factor 235 is also rendered in the graph 208 to indicate the difference in satisfaction of the production criteria 220 with respect to time 210. The graph 208 may be rendered on the GUI 108 to visualize the industrial plant 180. The steps used to optimize operation of the industrial plant 180 is explained in FIG 6.

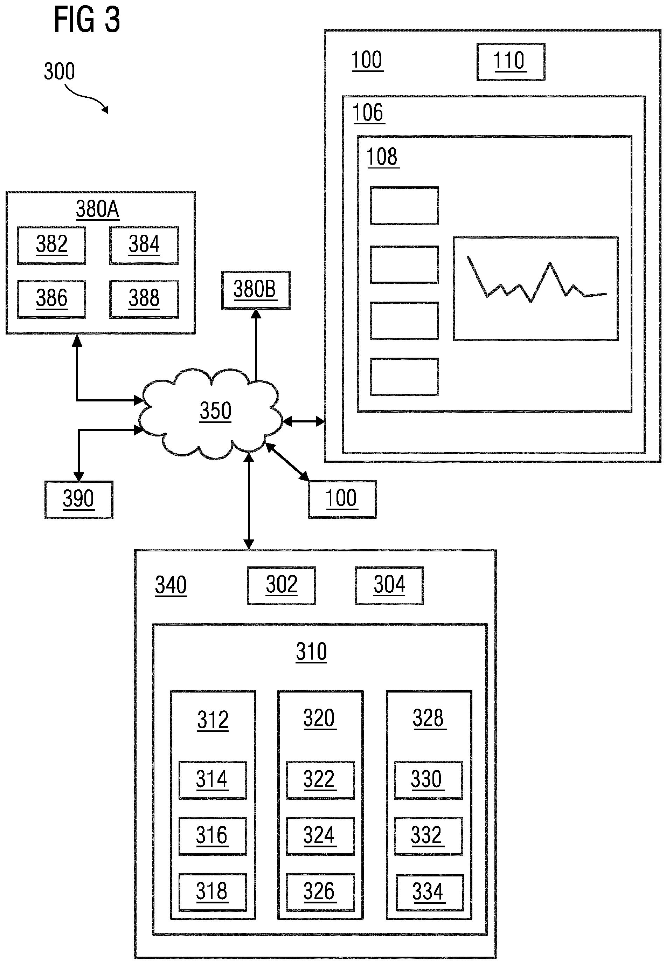

FIG 3 illustrates a block diagram of a system 300 to optimise operations of multiple industrial plants 380A-B, according to an embodiment of the present invention. The industrial plant 380A includes multiple assets 382-388. The system 300 includes multiple apparatus 100, each communicatively coupled to the industrial plants 380A-B via a network interface 350. The system 300 includes a server 340 with a communication unit 302, a processing unit 304, and a memory 310. The memory 310 includes a simulation module 312, a learning module 320 and an optimization module 328.

The simulation module 312 includes a plant simulation module 314, a process simulation module 316, and a parameter module 318. The plant simulation module 314 is configured to generate plant replicas for each of the industrial plants 380A and 380B. Further, the plant simulation module 314 generates asset replicas for each of the assets 382-388. The parameter module 318 is configured to generate the set of optimal parameters and select the optimized parameters for each of the industrial plants 380A and 380B. The apparatus 100 is configured to perform the functions of the simulation module 312.

The learning module 320 includes a plant learning module 322, a process learning module 324 and a collaborative learning module 326. The plant learning module 322 includes plant training data for each of the industrial plants 380A and 380B. For example, the plant training data includes historical operation parameters the industrial plants 380A-B. The plant training data is provided to a neural network to analyse the historical operation parameters to generate an availability model for each of the industrial plants 380A-B. The process learning module 324 includes process training data such as historical production parameters for the resultant product. The process learning module 324 is configured to determine the process reliability based on the process training data. The collaborative learning module 326 is configured to apply learning from the plant training data of the industrial plant 380A to the industrial plant 380B based on a variability factor. The variability factor is a measure of variation in the assets in the industrial plants 380A and 380B including variation in operation environment associated with each of the industrial plants 380A and 380B, operation profile of each of the industrial plants 380A and 380B, etc.

The optimization module 328 includes a plant management module 330, a control module 332 and a maintenance module 334. The plant management module 330 is configured to manage the assets 382-388 in the industrial plant 380A. The management of the assets 382-388 is performed throughout their life-cycle. Further, the plant management module 330 is configured to track the assets 382-388 through all the stages of operation from 'as good as new' to 'as bad as old'. The plant management module 330 is configured to map a new asset to asset models based on the asset replicas and sensor data associated with the new asset. The control module 332 is configured to generate control signals to update the operation parameters of the industrial plants 380A and 380B based on the optimized operation parameters. The maintenance module 334 is configured to determine a third party maintenance center 390 that is capable of providing service and maintenance to the asset 382-388 and/or industrial assets 380. The maintenance centre 390 is determined such that the availability of the asset 382-388 and/or industrial assets 380 is optimized while ensuring the process reliability.

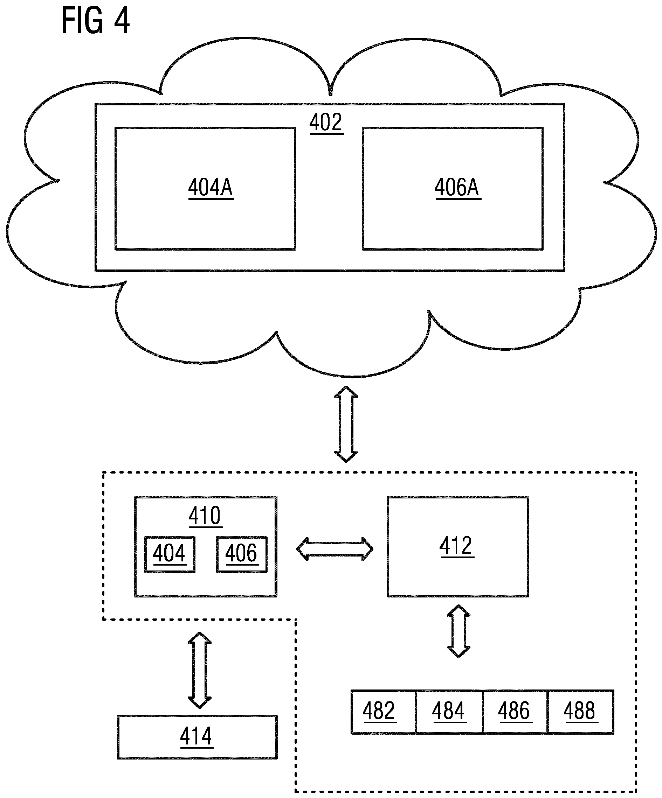

FIG 4 is a schematic representation illustrating optimization of a fluid bottling process in a bottling plant 480, according to an embodiment of the present invention. The bottling plant 480 includes a conveyor belt 482, a filing station 484, a capping station 486, and a labelling station 488 (collectively referred to as assets 482-488). The bottling plant also includes a Programmable Logic Controller (PLC) 412 communicatively coupled to the conveyor belt 482, the filing station 484, the capping station 486 and the labelling station 488. The bottling plant 480 further comprises an IoT device 410. The IoT device 410 is a physical device that serves as the connection point between a network interface 402, the PLC 412 and the assets 482-488. The IoT device 410 is configured to receive the production criteria 414 for the operation of the bottling plant 480. The IoT device 410 includes a plant replica 404 of the bottling plant 480 and a process replica 406 of the fluid bottling process. The operation of the bottling plant 480 replica 404 and the process replica 406 is as described in FIG 1. The IoT device 410 is advantageously capable of optimizing the bottling plant 480 on premises without the need of uploading the operation parameters of the bottling plant 480 onto a cloud computing platform 402.

In an event that the IoT device 410 is unable to perform all the steps involved in optimising the bottling plant 480. The plant training model 404A and the process training model 406A provided on the cloud computing platform 402 are capable of performing one or more steps involved in optimizing the bottling plant 480.

FIG 5 is a schematic representation illustrating one-dimension simulation 500 of the conveyor 482 of the bottling plant 480. The simulation 500 illustrates a signal source 502 connected to a subtraction module 504 which is connected to a proportional-integral-derivative (PID) controller 506 and a gain compensator 508. The PID controller 506 is connected to a motor 510 and the gain compensator 508 is connected to rotary speed sensor. The motor 510 is connected to a controlled voltage source 540 and a potential reference 545. The controlled voltage source 550 is fed by a voltage source 550. The motor 510 is also connected to a belt assembly 535. The belt assembly 535 includes mechanical couplers 512 and 530, sheaves 514 and 528, spring dampner 516, 520, 522, 526 and mass friction module 518 and 524. The simulation 500 is used to simulate a set of optimal parameters and the optimized parameters to determine the impact on the production criteria and remaining life of the conveyor 482.

FIG 6 is a flowchart 600 of a method of optimizing operation of an industrial plant. At step 602, a plant replica of the industrial plant is generated. The plant replica reflects an operation state of the industrial plant in real-time by updating the plant replica with sensor data associated with the operation state of the industrial plant.

The plant replica comprises an availability model for the industrial plant, and one-dimension model and/or three-dimension model of the industrial plant and/or each asset in the industrial plant. For example, the one-dimension model includes functional mock-up units of the industrial plant capable of simulating the operation and functionality of the industrial plant. The three-dimension model is a high-fidelity digital twin of the industrial plant that is configured to illustrate the operation and functionality of the industrial plant with accuracy and detail. The one-dimension model and three-dimension model are physics-based models generated through finite element analysis.

At step 604, a process replica is generated. The process replica is a simulation of the process performed by the industrial plant. The process replica includes material model including material parameters associated with materials used in the process. The material parameters include and are not limited to properties of the material, impact of variation in the material on the process and resultant product of the process. Further, the process replica includes a criteria model with quality criteria, quantity criteria and time criteria associated with satisfaction of production criteria. The process replica also includes process parameters associated with the production criteria. For example, the process parameters include critical process variables that determine whether the production criteria will be satisfied or not.

The generation of the process replica includes generation of the criteria model for the industrial plant. The criteria model is generated by determining a performance factor of the production criteria for the industrial plant at predetermined time intervals. The performance factor comprises a measure of performance of the production criteria at the predetermined time intervals. For example, the performance factor is measured as production of 1000 litre beverage in one minute with 0.01 % variability. The criteria model generation further includes prediction of optimal performance factors for the process based on the production criteria.

At step 606, a process reliability of the process is predicted by comparing the performance factor and the optimal performance factors. The process reliability is a measure of whether the processes is likely to be performed to the satisfaction of the production criteria without deviation. The process reliability is measured for a specified availability of the industrial plant.

At step 608, set of optimal parameters of the process is generated based on the predicted process reliability and the production criteria. The set of optimal parameters are generated by determining a shortfall factor based on the resultant product, the availability model and the process reliability. The resultant product is analysed to understand whether the quality criteria is met. Further, the shortfall factor with respect to the quality criteria and the time criteria is analysed based on the availability of the industrial plant and the process reliability. The impact of the shortfall factor is used to generate the set of optimal parameters of the processes.

At step 610, optimized operation parameters are selected from the set of optimal parameters by simulating the set of operation parameters on the plant replica. By simulating the set of optimal parameters, the impact of each of the set of optimal parameters on the plant replica is predicted and analysed. The optimized operation parameters are selected based on optimal impact on the plant replica.

At step 612, an operation state of each of the plurality of assets in the industrial plant is determined based on sensor data associated with operation of the assets and/or industrial plant. The operation state is determined periodically to determine whether the resultant product satisfies the production criteria.

At step 614, a new operation state is predicted for the assets by simulating the optimized operation parameters on the process replica and the plant replica. The new operation state indicates operation of the industrial plant if the operation parameters are changed to reflect the optimized operation parameters.

At step 616, operation of the industrial plant is optimized to satisfy the production criteria by tuning operation parameters of the industrial plant to reflect the optimized operation parameters.

At step 618, an asset availability model is generated for each of the assets based on the remaining life and the forecasted life of the assets. The asset availability model comprises asset service parameters including historical sensor data of the assets. In this step, the remaining life is determined based on the sensor data and the plant replica. Further, the forecast life is determined for the new operation state.

At step 620, the availability model for the industrial plant is updated based on the asset availability model. The availability model comprises scheduled down-time and predicted down-time for the industrial plant.

The present invention can take a form of a computer program product comprising program modules accessible from computer-usable or computer-readable medium storing program code for use by or in connection with one or more computers, processing units, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference sign list

FIG 1
   apparatus 100
   communication unit 102
   processor 104
   display 106
   Graphical User Interface (GUI) 108
   memory 110
   plant simulation module 112
   availability module 114
   model generator module 116
   process simulation module 118
   simulation module 120
   material module 122
   criterial module 124
   parameter module 128
   life module 130
   asset life module 132
   plant life module 134
   reliability module 126
   parameter module 128
   asset life module 132
   plant life module 134
   network interface 150
   industrial plant 180
   assets 182-188
   controller 190
   transceiver 192
   processor 194
   memory 196
FIG 2
   graph 208
   time 210
   production criteria 220
   operation state 230
   shortfall factor 235
   new operation state 240
   arrow 250
   plant replica 280
   sensor data 285
   asset replicas 282-288
FIG 3
   system 300
   communication unit 302
   processor 304
   memory 310
   simulation module 312
   plant simulation module 314
   process simulation module 316
   parameter module 318
   learning module 320
   plant learning module 322
   process learning module 324
   collaborative learning module 326
   optimization module 328
   plant management module 330
   control module 332
   maintenance module 334
   server 340
   network interface 350
   industrial plants 380A-B
   multiple assets 382-388
   maintenance centre 390
FIG 4
   bottling plant 480
   conveyor belt 482
   filing station 484
   capping station 486
   labelling station 488
   Programmable Logic Controller (PLC) 412
   gateway 410
   production criteria 414
   process replica 406
   cloud computing platform 402.
   plant training model 404A
   process training model 406A
FIG 5
   one-dimension simulation 500
   signal source 502
   subtraction module 504
   proportional-integral-derivative (PID) controller 506
   gain compensator 508
   motor 510
   controlled voltage source 540
   potential reference 545
   voltage source 550
   belt assembly 535
   mechanical couplers 512 and 530
   sheaves 514 and 528
   spring dampner 516, 520, 522, 526
   mass friction module 518 and 524

## Claims

1. A method of optimizing operation of an industrial plant (180) comprising a plurality of assets (182-188), wherein at least one process is performed in the industrial plant (180), the method comprising:
predicting a process reliability of at least one process in the industrial plant (180) based on a process replica of the at least one process and a plant replica (280) of the industrial plant (180), wherein the process reliability is a function of the critical process variables associated with the at least one process and the production criteria;
generating a set of optimal parameters of the at least one process based on the predicted process reliability and production criteria associated with a resultant product of the at least one process;
determining optimized operation parameters from the set of optimal parameters by simulating the set of optimal parameters on the plant replica (280); and
optimizing operation of the industrial plant (180) to satisfy the production criteria by tuning operation parameters of the industrial plant (180) to reflect the optimized operation parameters.

2. The method according to claim 1, comprising:
generating the plant replica (280) of the industrial plant (180) representing an operation state of the industrial plant (180) in real-time, wherein the plant replica (280) comprises:
an availability model for the industrial plant (180), and
at least one of one-dimension model and three-dimension model of one of the industrial plant (180) and
each of the plurality of assets (182-188); and
updating the plant replica (280) of the industrial plant (180) with sensor data associated with the operation state of the industrial plant (180).

3. The method according to one of claim 1 and claim 2, comprising:
generating an asset model for each of the plurality of assets (182-188) based on corresponding asset replica associated with each of the assets, wherein the plant replica (280) comprises the asset replica; and
managing each of the assets using the asset model throughout the life-cycle of the assets.

4. The method according to claim 1, comprising:
generating the process replica of the at least one process, wherein the process replica comprises:
a material model including material parameters associated with materials in the at least one process,
a criteria model including quality criteria, quantity criteria and time criteria associated with the production criteria, and
process parameters including critical process variables associated with the production criteria.

5. The method according to one of claims 1 to 4, further comprising:
determining a shortfall factor associated with the resultant product based on the production criteria, the availability model and the predicted process reliability; and
determining impact of the shortfall factor on the production criteria, wherein the set of optimal parameters of the at least one process is generated based on the impact of the shortfall factor.

6. The method according to claim 1, wherein selecting optimized operation parameters from the set of optimal parameters by simulating the set of optimal parameters on the plant replica (280), comprises:
determining impact each of the set of optimal parameters on the resultant product by simulating the set of optimal parameters on the plant replica (280); and
selecting the optimized operation parameters with optimal impact for the at least one process.

7. The method according to one of claim 4 and claim 6,
wherein generating the criteria model for the industrial plant (180) comprising:
determining a performance factor of the production criteria at predetermined time intervals based on the sensor data, wherein the performance factor comprises a measure of performance of the production criteria at the predetermined time intervals; and
predicting optimal performance factors for the at least one process based on the production criteria for the predetermined time interval.

8. The method according to claim 7, further comprising:
determining the operation state (230) of each of the plurality of assets (182-188) in the industrial plant (180) based on the sensor data associated with operation of one of the plurality of assets (182-188), the at least one process, and the industrial plant (180);
predicting a new operation state (240) of each of the plurality of assets (182-188) by simulating the optimized operation parameters on the process replica and the plant replica (280); and
rendering the operation state and new operation state of the plurality of assets (182-188).

9. The method according to any of claims 1 to 8 comprising:
predicting a remaining life of each of the plurality of assets (182-188) for the operation state (230); and
predicting a forecasted life of each of the plurality of assets (182-188) for the new operation state (240).

10. The method according to any of claim 1 to claim 9, further comprising:
generating an asset availability model for each of the assets based on the remaining life and the forecasted life of the assets, wherein the asset availability model comprises asset service parameters including historical sensor data of the assets.

11. The method according to any of claim 1 to claim 10, further comprising:
generating the availability model for the industrial plant (180) based on the asset availability model, wherein the availability model comprises scheduled down-time and predicted down-time for the industrial plant (180); and
rendering the availability model and the asset availability model on a display unit.

12. The method according to any of claim 1 to claim 11 wherein the production criteria comprises the quality criteria, the quantity criteria and the time criteria to measure the performance of the at least one process.

13. An apparatus (100) to optimize operation of an industrial plant (180) comprising a plurality of assets (182-188), wherein at least one process is performed in the industrial plant (180), the apparatus comprising:
one or more processing units (104); and
a memory (110) communicatively coupled to the one or more processing units (104), wherein the memory (110) comprises an optimization module (140) stored in the form of machine-readable instructions executable by the one or more processing units (104), wherein the optimization module (140) is configured to perform one or more method steps according to claims 1 to 13.

14. A system (300) comprising:
one or more devices capable of providing condition data associated with operation of assets in a plurality of industrial plants (380A, 380B); and
one or more apparatuses (100) according to claim 14, communicatively coupled to one or more devices, wherein each of the apparatuses (100) is configured to optimize operation of at least one of the plurality industrial plants (380A, 380B) .

15. A computer-program product having machine-readable instructions stored therein, which when executed by a processing unit, cause the processing unit to perform a method according to claims 1 to 12.
